# EUROPEAN PATENT APPLICATION

(11) **EP 4 656 320 A1**
(43) Date of publication of application: **03.12.2025**
(21) Application number: 25177681.1
(22) Date of filing: 20.05.2025
(51) Int. Cl.: B23K 9/173, B23K 9/32

(54) **STAND-ALONE ROTATING POWER ADAPTERS**

(30) Priority: 30.05.2024 US 202463653571 P; 14.05.2025 US 202519207895
(71) Applicant: Illinois Tool Works Inc., Glenview IL 60025 (US)
(72) Inventor: CENTNER, Robert Joseph, Glenview, 60025 (US)
(74) Representative: HGF

(57) **Abstract**

An example rotating power adapter (120) configured to provide electrical current to a welding-type tool (130) and comprising: a casing (122) comprising a first end and a second end; and a rotating component (124) within the casing (122), wherein the rotating component (124) comprises a first interface (126) at the first end of the casing (122) and a second interface (128) at the second end of the casing (122) and is configured to receive a first connection (210) at the first interface (126) and a second connection (220) at the second interface (128), wherein the first connection (210) is a welding component (110) connection or a first welding cable connection (410), the second connection (220) is a welding-type tool (130) connection or a second welding cable connection (420), wherein one or more of the first interface (126) or the second interface (128) are configured to rotate with the rotating component (124), and wherein the rotating component (124) provides a path for the electrical current from a welding component (110) to the welding-type tool (130).

## Description

### CROSS REFERENCE TO RELATED APPLICATIONS

This application is a Non-Provisional Patent Application claiming priority to U.S. Provisional Patent Application No. 63/653,571 entitled "Stand-Alone Rotating Power Adapters" filed May 30, 2024, which is herein incorporated by reference in its entirety.

### FIELD OF THE DISCLOSURE

This disclosure relates generally to rotating power adapters and, more particularly, to stand-alone rotating power adapters.

### BACKGROUND

Conventional welding systems utilize a welding power cable that that provides electric current, shielding gas, and electrode wire to a welding torch or robotic arm in order to perform welding. Typically, one end of the welding power cable is fastened to a wire feeder by way of a power pin, and the other end is fastened to the welding torch. As the welding torch is manipulated, the welding power cable may bend, twist, and/or turn, causing mechanical wear on the welding power cable and eventually leading to failure of the welding power cable.

### SUMMARY

Welding systems with stand-alone rotating power adapters are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example welding-type system, in accordance with aspects of this disclosure.
FIG. 2 is a block diagram of an example rotating power adapter that may be used in the example welding-type system of FIG. 1.
FIG. 3 is a first example detailed view of an example welding-type system utilizing the example rotating power adapter as described in FIG. 2.
FIG. 4 is a second example detailed view of an example welding-type system utilizing the example rotating power adapter as described in FIG. 2.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

This disclosure relates generally to rotating power adapters and, more particularly, to stand-alone rotating power adapters. In particular, example welding-type systems are disclosed that include rotating power adapters. Disclosed example welding-type systems are disclosed that provide a mechanical and electrical connection between the wire feeding system and a power pin attached to the welding power cable and allow for rotation of the power pin, welding power cable, or welding torch relative to the wire feeder. Disclosed example welding systems with stand-alone rotating power adapters provide welding power, shielding gas, and electrode welding wire via the rotating power adapter to the welding torch.

During welding, as the welding torch is manipulated by a user or robot, the welding power cable may be twisted, stressed, and/or strained as the torch moves. Over time, this causes wear on the welding power cable and can cause failure of the cable. Additionally, the twisting and/or turning during the torch manipulation, may also cause stress and/or strain on a wire liner that runs from the power pin of the power welding cable through the welding torch. Furthermore, replacing welding power cables requires downtime and removing various connectors and components in order to replace the cables.

The present disclosure provides a welding-type system with a stand-alone rotating power adapter that connects the power pin of a welding torch to a wire feeder. The present disclosure advantageously permits rotation of the power pin, welding power cable, or welding torch relative to the wire feeder in order to minimize twisting, stress, and strain on the welding power cable and the wire liner.

Disclosed example welding-type systems provide stand-alone rotating power adapters to adapt a power pin from a welding torch to connect to welding components. Additionally, disclosed example welding-type systems provide stand-alone rotating power adapters that minimize twisting of a welding power cable from a welding torch. Disclosed example welding-type systems provide a connector that delivers shielding gas, welding current, and electrode wire to a welding torch. Disclosed example welding-type systems allow for rotation of a power pin and/or welding power cable relative to the wire feeder. Disclosed example welding feeder systems minimize movement to the wire liner due to movement of the welding torch during a welding process.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example rotating power adapters are configured to provide electrical current to a welding-type tool and including a casing comprising a first end and a second end and a rotating component within the casing. In disclosed example rotating power adapters, the rotating component comprises a first interface at the first end of the casing and a second interface at the second end of the casing and is configured to receive a first connection at the first interface and a second connection at the second interface, the first connection is a welding component connection or a first welding cable connection, the second connection is a welding-type tool connection or a second welding cable connection, one or more of the first interface or the second interface are configured to rotate with the rotating component, and the rotating component provides a path for the electrical current from a welding component to the welding-type tool.

Some example rotating power adapters include one or more first fasteners to attach the first connection to the first interface of the rotating component or one or more second fasteners to attach the second connection to the second interface of the rotating component. In some disclosed examples, the welding component is a wire feeder. In some disclosed examples, the wire feeder is integrated into a welding-type power supply. In some disclosed examples, the welding-type tool is a welding torch.

In some example rotating power adapters, the first interface is a first power pin, the second interface is a receptacle to receive a second power pin, and the rotating component is configured to receive the second power pin at the second interface. Some example rotating power adapters are further configured to provide one or more of shielding gas or electrode wire to the welding-type tool. In some example rotating power adapters, the rotating component rotates relative to the casing. In some example rotating power adapters, the first interface is a welding power cable, and the second interface is receptacle to receive a power pin.

Disclosed example welding-type systems include a welding-type tool, a welding component, and a rotating power adapter configured to provide electrical current from the welding component to the welding-type tool. Disclosed rotating power adapters include a casing comprising a first end and a second end, and a rotating component within the casing. In disclosed example welding-type systems, the rotating component includes a first interface at the first end of the casing and a second interface at the second end of the casing and is configured to receive a first connection at the first interface and a second connection at the second interface. In example disclosed rotating power adapters, the first connection is a welding component connection or a first welding cable connection, the second connection is a welding-type tool connection or a second welding cable connection, one or more of the first interface or the second interface are configured to rotate with the rotating component, and the rotating component provides a path for the electrical current from the welding component to the welding-type tool.

In some disclosed example welding-type systems, the welding-type tool is a welding torch. In disclosed example welding-type systems, the first interface is a power pin, the rotating power adapter is connected between the power pin and the welding-type tool, and a welding power cable between the power pin and the welding-type tool is operable to rotate at the rotating power adapter. In some disclosed example welding-type systems, the rotating power adapter is further configured to provide a pathway for one or more of shielding gas and welding wire. In some disclosed example welding-type systems, the rotating power adapter comprises one or more fasteners to engage the one or both of the first connection and the second connection with the rotating component.

In some disclosed example welding-type systems, the rotating power adapter further comprises one or more first fasteners to attach the first connection to the first interface of the rotating component and one or more second fasteners to attach the second connection to the second interface of the rotating component.

In some disclosed example welding-type systems, the welding component is a wire feeder. In some disclosed example welding-type systems, the welding-type tool is a welding torch. In some disclosed example welding-type systems, the first interface is a first power pin, the second interface is a receptacle to receive a second power pin, and the rotating component is configured to receive the second power pin at the second interface. In some disclosed example welding-type systems, the rotating power adapter is further configured to provide one or more of shielding gas or electrode wire to the welding-type tool. In some disclosed example welding-type systems, the first interface is a welding power cable, and the second interface is receptacle to receive a power pin.

As used herein, the terms "first," "second," "third," etc. may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

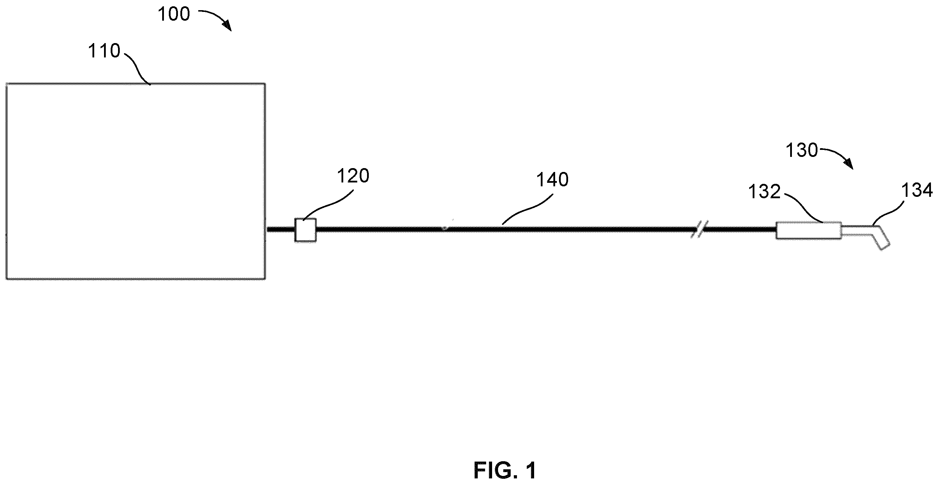

FIG. 1 illustrates an example welding-type system 100. The example welding type system 100 of FIG. 1 includes a welding component 110, a stand-alone rotating power adapter 120, a welding torch 130, and a welding power cable 140. The welding component 110 may be a power supply for delivery of welding power and shielding gas with a welding wire feeder integrated into the power supply or may be a stand-alone welding wire feeder. The power supply may provide power to the integrated or stand-alone wire feeder in order to supply electrode wire to the welding torch 130 for various welding applications (e.g., GMAW welding, flux core arc welding (FCAW)).

The welding torch 130, such as a gas tungsten arc welding (GTAW) torch, a wire-fed welding torch (e.g., a torch to perform gas metal arc welding (GMAW), flux cored arc welding (FCAW), etc.), a plasma cutting torch, a carbon arc cutting torch, a gouging torch, etc., may be connected to the welding component 110 via the welding power cable 140. The example welding torch 130 includes a torch body 132 and a torch head 134. A gas source (not shown) may provide shielding gas to the welding component 110. The welding component 110 provides welding power, shielding gas, and electrode wire to the torch body 132 of the welding torch 130 for delivery to the torch head 134 via a welding power cable 140.

The welding component 110 may include a controller (not shown) to control the operation of the welding component 110. The controller may also include interface circuitry for communicating data to other devices in the system, such as a power supply, a wire feeder, or other welding-type devices. For example, in some situations, the welding component 110 may wirelessly communicate with other welding devices within the welding system. Further, in some situations, the welding component 110 communicates with other welding devices using a wired connection, such as by using a network interface controller (NIC) to communicate data via a network (e.g., ETHERNET, 10baseT, 10base100, etc.).

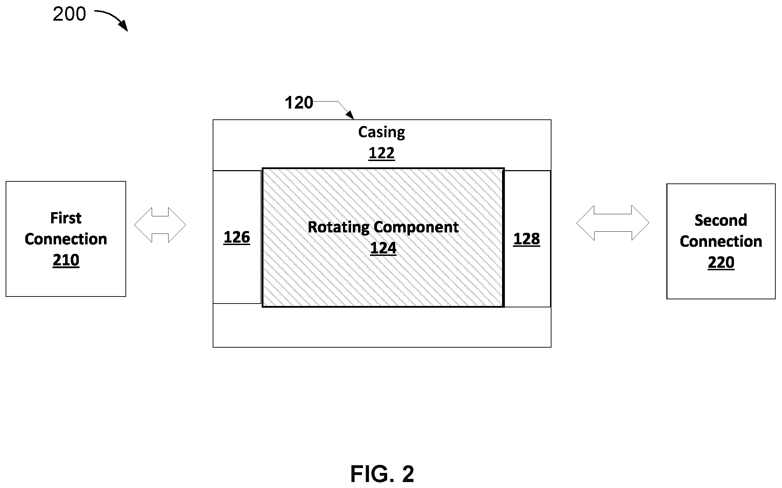

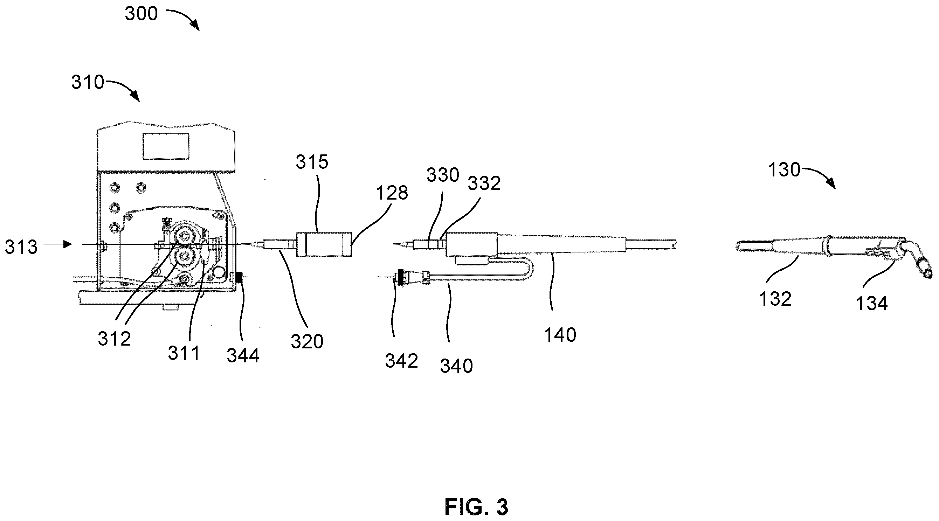

A rotating power adapter 120 may be installed between the welding component 110 and the welding torch 130 in order to provide shielding gas, electric current, and electrode wire to the welding torch 130 and allow for rotation of the welding power cable 140 relative to the welding component 110 and/or the welding torch 130. The rotating power adapter 120 may be installed at any point between the welding torch 130 and the welding component 110 and may allow for rotation of the welding power cable 140 relative to the welding torch 130 and/or the welding component 110 in order to prevent stress, strain, and/or premature failure of the welding power cable 140. A power pin (not shown but described further below with regards to FIGs. 2 and 3) from the welding torch 130 may be attached to the welding power cable 140 and may be inserted into the rotating power adapter 120 to allow gas, electric current, and welding wire to be delivered through the welding power cable 140 to the welding torch 130.

The welding power cable 140 may be one unitary power cable from the welding torch 130 to the welding component 110 or may be one or more power cables (including segments of power cables) connected together (either directly or via a connector or coupler) from the welding torch to the welding component 110. Additionally and/or alternatively, the power cables or power cable segments may be connected using a rotating power adapter 120 in order to allow for rotating of one or more power cable segments from the welding component 110 to the welding torch 130.

FIG. 2 is a block diagram of an example rotating power adapter 120 that may be used in the example welding-type system of FIG. 1. The rotating power adapter 120 includes a casing 122 with a rotating component 124 arranged within the casing 122. The rotating component 124 includes a first interface 126 and a second interface 128. The rotating component 124 is coupled to a first connection 210 via the first interface 126 and to a second connection 220 via the second interface 128. In some examples, the first interface 126 may be an interface to connect to a welding power cable or to connect to the welding component 110. The first interface 126 may be a direct connection, an intermediary component to attach the rotating power adapter 120 to the welding power cable or to the wire feeder, an interface to receive the first connection 210, an interface to be received by the first connection 210, etc. The second interface 128 may be an interface to receive a power pin attached to the welding torch 130 or to attach to a welding power cable. The second interface 128 may be a direct connection, an intermediary component to attach the rotating power adapter 120 to the second connection 220, an interface to receive the second connection 220, an interface to be received by the second connection 220, etc.

The rotating component 124 has the ability to rotate relative to the casing 122, the first interface 126, and/or the second interface 128. Additionally and/or alternatively, the first interface 126 and/or second interface 128 may rotate relative to the casing 122 and/or relative to each other. Additionally and/or alternatively, the casing 122 may rotate relative to the rotating component 124, the first interface, and/or the second interface 128. In some examples, the casing 122 of the rotating power adapter 120 may remain fixed while the rotating component 124, the first interface 126, and/or the second interface 128 rotate relative to the casing 122.

In some examples, the rotating component 124 is affixed to the casing 122. In some examples, a circumference of the rotating component 124 is affixed to the casing 122. For example, rotating component 124 may be fastened to the casing 122 such that the rotating component 124 may rotate while the casing 122 remains fixed. In some examples, the casing 122 includes one or more electrical contacts arranged within the casing 122 and/or the rotating component 124 to provide an electrical connection between the casing 122 and the rotating component 124 and/or between the rotating component 124, the first interface 126, and/or the second interface 128.

The first connection 210 may be a welding power cable or a wire feeder that is coupled to the first interface 126. In some examples, the first connection 210 is a welding power cable that is directly connected or is connected via an intermediary component to the first interface 126. In some other examples, the first connection 210 is a connector within a wire feeder that receives or is coupled to the first interface 126. The second connection 220 may be a welding power cable or a power pin. In some examples, the second connection 220 is a power pin from a welding torch or a welding power cable that is coupled to or otherwise received by the second interface 128 or that includes an intermediary component to attach the second connection 220 to the second interface 128.

In some examples, the rotating power adapter 120 is made of conductive material, such as brass or copper, as non-limiting examples. In some other examples, the casing 122 of the rotating power adapter 120 is made of a non-conductive material, and the rotating component 124, first interface 126, and second interface 128 are made of a conductive material.

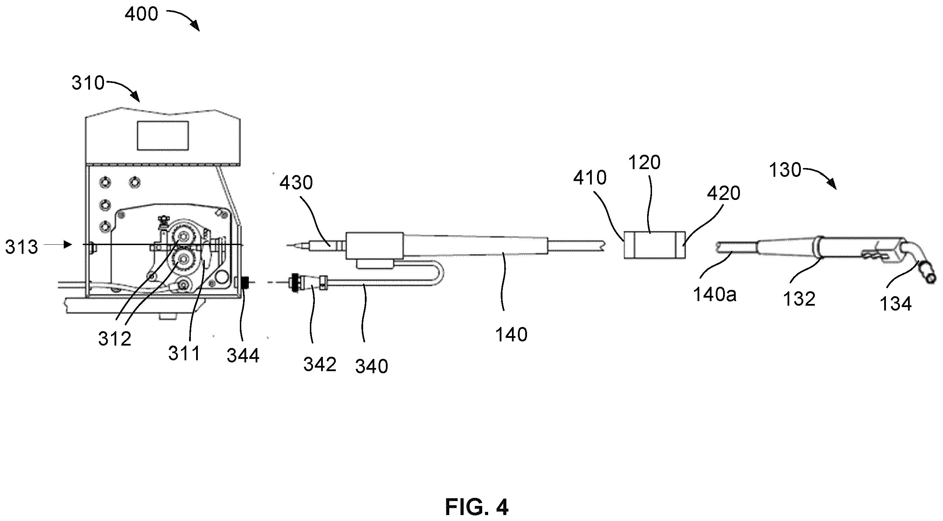

FIG. 3 is a first example detailed view of 300 an example welding-type system 100 with a first example rotating power adapter such as depicted in FIG. 2. FIG. 4 is a second example detailed view 400 of an example welding-type system 100 with a second example rotating power adapter such as depicted in FIG. 2. The example welding-type system 300 of FIG. 3 includes a welding wire feeder 310, a rotating power adapter 120 including a first power pin 320, a welding power cable 140, a trigger 340, and a welding torch 130. The welding torch 130 may be connected to the welding power cable 140. The welding power cable 140 provides welding power, gas, and welding wire from the welding wire feeder 310 to the welding torch 130.

The wire feeder 310 may include a knob 311 or other mechanism for tightening the first power pin 320 of the rotating power adapter 120 in the wire feeder 310, and drive rolls 312 for advancing or retracting electrode wire towards and away from the welding torch 130 via the rotating power adapter 120.

In some examples, the rotating power adapter 120 may include a first interface which is a first power pin 320. The first power pin 320 may connect to the wire feeder 310 to allow the rotating power adapter 120 to provide welding power, gas, and welding wire to the welding torch 130 via the welding power cable 140. In some examples, the first power pin 320 may inserted into the wire feeder 310 and secured using a clamping, gripping, securing, or locking mechanism in order to secure the first power pin 320 to the wire feeder 310. For example, the first power pin 320 may be inserted into the welding wire feeder 310 and secured to the welding wire feeder 310 via a knob 311 or similar device of the welding wire feeder 310, which may be used to tighten a wingnut clamping mechanism to secure the first power pin 320 to the wire feeder 310. In some other examples, the knob 311 may be used to tighten another type of securing mechanism to secure the first power pin 320 to the rotating power adapter 120 while allowing the first power pin 320 to rotate with the rotating component 124.

The welding power cable 140 may include a second power pin 330which may be received by the rotating power adapter 120 via the second interface 128. In some examples, the second interface 128 may be a receptacle, a bore, a socket, or other type of interface that is able to receive the second power pin 330 from the welding torch 130. Once the second power pin 330 is inserted into the second interface 128 of the rotating power adapter 120, the second power pin 330 is coupled or fastened within the rotating power adapter 120 to the rotating component 124 and/or the second interface 128, which allows the second power pin 330 and/or the welding power cable 140 to rotate relative to the rotating power adapter 120 and/or the wire feeder 310.

In some examples, the second power pin 330 is fastened using one or more of a clamp, clip, screw, nuts, bolts, rivets, pins, washers, etc. In some examples, one or more bearings (not shown) may be placed within the casing 122 and/or rotating component 124 in order to provide stability while allowing rotation of the rotating component 124 and/or the second power pin 330.

The rotating power adapter 120 may be constructed of a conductive material such as copper and/or brass. The second interface 128 of the rotating power adapter 120 may include a hollow bore or aperture (as described above with regards to FIG. 2) to receive the second power pin 330. The second power pin 330 of the welding power cable 140 is positioned within the rotating power adapter 120 and coupled to the rotating power adapter 120, which is in turn coupled to the wire feeder 310 via the first power pin 320.

Electrode wire 313 may be inserted at the wire feeder 310 and may be guided using a wire guide (not shown) through the drive roll(s) 312, into the rotating power adapter 120 through the first power pin 320 and advance through the rotating component 124 (see FIG. 2) of the rotating power adapter 120 and into the second power pin 330, which is connected to the welding power cable 140 and leads to the welding torch 130. A wire liner 332 may be inserted into the second power pin 330 and run through a length of the welding power cable 140 and the welding torch 130. Once inserted, the wire liner 332 may receive the electrode wire 313 which may be advanced using the drive roll(s) through the rotating power adapter 120, into the second power pin 330 and to the welding torch 130 for use in welding. In some examples, the wire liner 332 is fixed at the second power pin 330 side of the welding power cable 140 and/or at the welding torch 130 end. A portion of the wire liner 332 may be external to the second power pin 330 so that the wire liner 332 may receive the electrode wire 313 once the second power pin 330 is inserted into the rotating power adapter 120 within the wire feeder 310. Additionally and/or alternatively, the wire liner 332 may extend through the rotating power adapter 120 and be external to the first power pin 320 to receive the electrode wire.

The second power pin 330 with the wire liner 332 may be inserted into the rotating component 124 of the rotating power adapter 120. The second power pin 330 of the welding power cable 140 is configured to couple the rotating power adapter 120 to the welding power cable 140 in order to deliver shielding gas, welding power, and electrode wire to the welding torch 130 and may be positioned within the rotating component 124 of the rotating power adapter 120. The second power pin 330 may rotate within the rotating power adapter 120. The second power pin 330 may be fastened to the rotating component 124 of the rotating power adapter 120 in order to allow the second power pin 330 to rotate with the rotating component 124, thus allowing any strain and/or tension in the welding power cable 140 to be released.

The trigger 340 may be connected to the wire feeder 310 using a trigger plug 342 and may be received at the wire feeder by a trigger receptacle 344. In some examples, the trigger 340 may include a rotating connector (not shown) to allow the trigger to rotate relative to the wire feeder 310 and/or the welding torch 130, thereby minimizing stress and strain on the trigger 340.

Additionally and/or alternatively, a rotating power adapter 120 may be placed at other points between the wire feeder 310 and the welding torch 130. For example in FIG. 4, the first interface may be a first welding cable connection 410 and/or the second interface may be a second welding cable connection 420 of the rotating power adapter 120, which may connect to a welding power cable 140 or welding power cable 140a (which may be a unitary welding power cable or welding power cable segment as described above) between the wire feeder 310 and the welding torch 130. The rotating power adapter 120 may directly connect to the welding power cable 140 at the first welding cable connection 410 and/or the second welding cable connection 420 in order to allow for rotation of the welding power cable 140 relative to the wire feeder 310 and/or the welding torch 130. A third power pin 430 from the welding torch 130 may be inserted into the wire feeder 310, and the welding cable 140 may connect at an opposite end of the rotating power adapter 120 in order to allow the rotating power adapter 120 to provide rotation for the welding power cable 140 and/or the welding power cable 140a relative to the wire feeder 310 and/or the welding torch 130.

In some examples, a welding power cable or cable segment may be placed between the wire feeder 310 and the first power pin 320, between the second power pin 330 and the second interface 128, between the wire feeder 310 and the third power pin 430, or at any other point between the wire feeder 310 and the welding torch 130 using a rotating power adapter 120 in order to allow the welding power cable 140 140a to rotate relative to the wire feeder 310 and/or the welding torch. In some examples, the rotating power adapter may receive a power pin at the first interface and include a power pin at the second interface. In some examples, the rotating power adapter may include a power pin or a receptacle to receive a power pin at the first interface and include a connection for a welding power cable at the second interface, or vice versa. In some examples, more than one rotating power adapter 120 may be used from the wire feeder 310 to the welding torch 130 in order to allow for rotation and to provide an electrical and mechanical path from the wire feeder 310 to the welding torch 130.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A rotating power adapter configured to provide electrical current to a welding-type tool and comprising:
   a casing comprising a first end and a second end; and
   a rotating component within the casing,
   wherein the rotating component comprises a first interface at the first end of the casing and a second interface at the second end of the casing and is configured to receive a first connection at the first interface and a second connection at the second interface,
   wherein the first connection is a welding component connection or a first welding cable connection, the second connection is a welding-type tool connection or a second welding cable connection,
   wherein one or more of the first interface or the second interface are configured to rotate with the rotating component, and
   wherein the rotating component provides a path for the electrical current from a welding component to the welding-type tool.
Clause 2. The rotating power adapter of clause 1, further comprising one or more first fasteners to attach the first connection to the first interface of the rotating component or one or more second fasteners to attach the second connection to the second interface of the rotating component.
Clause 3. The rotating power adapter of clause 1, wherein the welding component is a wire feeder.
Clause 4. The rotating power adapter of clause 3, wherein the wire feeder is integrated into a welding-type power supply.
Clause 5. The rotating power adapter of clause 1, wherein the welding-type tool is a welding torch.
Clause 6. The rotating power adapter of clause 1, wherein the first interface is a first power pin, the second interface is a receptacle to receive a second power pin, and the rotating component is configured to receive the second power pin at the second interface.
Clause 7. The rotating power adapter of clause 1, wherein the rotating power adapter is further configured to provide one or more of shielding gas or electrode wire to the welding-type tool.
Clause 8. The rotating power adapter of clause 1, wherein the rotating component rotates relative to the casing.
Clause 9. The rotating power adapter of clause 1, wherein the first interface is a welding power cable, and the second interface is receptacle to receive a power pin.
Clause 10. A welding-type system comprising:
   a welding-type tool;
   a welding component; and
   a rotating power adapter configured to provide electrical current from the welding component to the welding-type tool and comprising:
      a casing comprising a first end and a second end, and
      a rotating component within the casing,
      wherein the rotating component comprises a first interface at the first end of the casing and a second interface at the second end of the casing and is configured to receive a first connection at the first interface and a second connection at the second interface,
      wherein the first connection is a welding component connection or a first welding cable connection, the second connection is a welding-type tool connection or a second welding cable connection,
      wherein one or more of the first interface or the second interface are configured to rotate with the rotating component, and
      wherein the rotating component provides a path for the electrical current from the welding component to the welding-type tool.
Clause 11. The welding-type system of clause 10, wherein the welding-type tool is a welding torch.
Clause 12. The welding-type system of clause 10, wherein the first interface is a power pin, the rotating power adapter is connected between the power pin and the welding-type tool, and a welding power cable between the power pin and the welding-type tool is operable to rotate at the rotating power adapter.
Clause 13. The welding system of clause 10, wherein the rotating power adapter is further configured to provide a pathway for one or more of shielding gas and welding wire.
Clause 14. The welding system of clause 10, wherein the rotating power adapter comprises one or more fasteners to engage the one or both of the first connection and the second connection with the rotating component.
Clause 15. The welding system of clause 10, wherein the rotating power adapter further comprises one or more first fasteners to attach the first connection to the first interface of the rotating component and one or more second fasteners to attach the second connection to the second interface of the rotating component.
Clause 16. The welding system of clause 10, wherein the welding component is a wire feeder.
Clause 17. The welding system of clause 10, wherein the welding-type tool is a welding torch.
Clause 18. The welding system of clause 10, wherein the first interface is a first power pin, the second interface is a receptacle to receive a second power pin, and the rotating component is configured to receive the second power pin at the second interface.
Clause 19. The welding system of clause 10, wherein the rotating power adapter is further configured to provide one or more of shielding gas or electrode wire to the welding-type tool.
Clause 20. The welding system of clause 10, wherein the first interface is a welding power cable, and the second interface is receptacle to receive a power pin.

## Claims

1. A rotating power adapter configured to provide electrical current to a welding-type tool and comprising:
a casing comprising a first end and a second end; and
a rotating component within the casing,
wherein the rotating component comprises a first interface at the first end of the casing and a second interface at the second end of the casing and is configured to receive a first connection at the first interface and a second connection at the second interface,
wherein the first connection is a welding component connection or a first welding cable connection, the second connection is a welding-type tool connection or a second welding cable connection,
wherein one or more of the first interface or the second interface are configured to rotate with the rotating component, and
wherein the rotating component provides a path for the electrical current from a welding component to the welding-type tool.

2. The rotating power adapter of claim 1, further comprising one or more first fasteners to attach the first connection to the first interface of the rotating component or one or more second fasteners to attach the second connection to the second interface of the rotating component.

3. The rotating power adapter of claim 1, wherein the welding component is a wire feeder.

4. The rotating power adapter of claim 3, wherein the wire feeder is integrated into a welding-type power supply.

5. The rotating power adapter of claim 1, wherein the welding-type tool is a welding torch.

6. The rotating power adapter of claim 1, wherein the first interface is a first power pin, the second interface is a receptacle to receive a second power pin, and the rotating component is configured to receive the second power pin at the second interface.

7. The rotating power adapter of claim 1, wherein the rotating power adapter is further configured to provide one or more of shielding gas or electrode wire to the welding-type tool.

8. The rotating power adapter of claim 1, wherein the rotating component rotates relative to the casing or
wherein the first interface is a welding power cable, and the second interface is receptacle to receive a power pin.

9. A welding-type system comprising:
a welding-type tool;
a welding component; and
a rotating power adapter configured to provide electrical current from the welding component to the welding-type tool and comprising:
a casing comprising a first end and a second end, and
a rotating component within the casing,
wherein the rotating component comprises a first interface at the first end of the casing and a second interface at the second end of the casing and is configured to receive a first connection at the first interface and a second connection at the second interface,
wherein the first connection is a welding component connection or a first welding cable connection, the second connection is a welding-type tool connection or a second welding cable connection,
wherein one or more of the first interface or the second interface are configured to rotate with the rotating component, and
wherein the rotating component provides a path for the electrical current from the welding component to the welding-type tool,
and optionally, wherein the welding-type tool is a welding torch.

10. The welding-type system of claim 9, wherein the first interface is a power pin, the rotating power adapter is connected between the power pin and the welding-type tool, and a welding power cable between the power pin and the welding-type tool is operable to rotate at the rotating power adapter.

11. The welding system of claim 9, wherein the rotating power adapter is further configured to provide a pathway for one or more of shielding gas and welding wire or
wherein the rotating power adapter comprises one or more fasteners to engage the one or both of the first connection and the second connection with the rotating component.

12. The welding system of claim 9, wherein the rotating power adapter further comprises one or more first fasteners to attach the first connection to the first interface of the rotating component and one or more second fasteners to attach the second connection to the second interface of the rotating component.

13. The welding system of claim 9, wherein the welding component is a wire feeder;
or wherein the welding-type tool is a welding torch.

14. The welding system of claim 9, wherein the first interface is a first power pin, the second interface is a receptacle to receive a second power pin, and the rotating component is configured to receive the second power pin at the second interface.

15. The welding system of claim 9, wherein the rotating power adapter is further configured to provide one or more of shielding gas or electrode wire to the welding-type tool;
or wherein the first interface is a welding power cable, and the second interface is receptacle to receive a power pin.
